# FASCICULE DE BREVET EUROPEEN

(11) **EP 0 809 928 B1**
(45) Date de publication et mention de la délivrance du brevet: **07.08.2002**
(21) Numéro de dépôt: 97440046.7
(22) Date de dépôt: 22.05.1997
(51) Int. Cl.: A01D 34/66

(54) **Machine de coupe**
Mähmaschine
Cutting machine

(30) Priorité: 28.05.1996 FR 9606697
(43) Date de publication de la demande: 03.12.1997
(73) Titulaire: KUHN S.A., 67700 Saverne (FR)
(72) Inventeur: Walch, Martin, 67490 Dettwiller (FR); Wattron, Bernard, 67700 Haegen (FR)

(56) Documents cités:
- EP-A- 0 556 143
- EP-A- 0 655 186
- EP-A- 0 709 018
- DE-A- 1 582 356
- DE-A- 2 129 804
- DE-U- 8 803 171
- GB-A- 2 157 936
- NL-A- 9 202 216

## Description

La présente invention concerne une machine de coupe de végétaux comportant:
- une structure d'attelage destinée à être liée à un véhicule moteur ;
- un mécanisme de coupe s'étendant, lors du travail, transversalement à la direction d'avance au travail (position de travail) et, lors du transport, au moins sensiblement suivant la direction d'avance au travail (position de transport) ;
- un bras de suspension lié d'une part à la structure d'attelage au moyen d'une première articulation d'axe longitudinal dirigé vers le haut et d'autre part au mécanisme de coupe au moyen d'une deuxième articulation d'axe longitudinal dirigé au moins sensiblement suivant la direction d'avance au travail lorsque ledit mécanisme de coupe est dans la position de travail ;
- un dispositif de verrouillage permettant, en position de transport, de verrouiller le pivotement du mécanisme de coupe autour de l'axe longitudinal de la deuxième articulation, et comportant un organe de liaison lié d'une part au mécanisme de coupe et d'autre part à la structure d'attelage.

Une telle machine de coupe de végétaux est connue par le document EP-A-0 655 186.

Cette machine de coupe connue comporte dans les grandes lignes une structure d'attelage, un mécanisme de coupe, un bras de suspension et un dispositif de verrouillage.

Le bras de suspension est lié à la structure d'attelage au moyen d'une première articulation d'axe longitudinal dirigé vers le haut de manière qu'il puisse être pivoté dans une position de travail et dans une position de transport autour dudit axe longitudinal.

Le bras de suspension est également lié au mécanisme de coupe au moyen d'une deuxième articulation d'axe longitudinal sensiblement horizontal de manière que ledit mécanisme de coupe puisse pivoter autour dudit axe longitudinal afin de pouvoir suivre le relief du terrain lors du travail.

Le dispositif de verrouillage quant à lui est destiné à verrouiller, en position de transport, le pivotement du mécanisme de coupe autour de l'axe longitudinal de la deuxième articulation et, d'autoriser, en position de travail, ledit pivotement. A cet effet, le dispositif de verrouillage comporte une plaque pivotante liée d'une part au mécanisme de coupe au moyen d'une articulation supplémentaire d'axe longitudinal parallèle à l'axe longitudinal de la deuxième articulation et d'autre part au bras de suspension au moyen d'une liaison. Cette liaison se compose d'une rainure comportant une première partie sensiblement verticale et une deuxième partie sensiblement horizontale et orthogonale à la première partie. Cette liaison comporte en sus un arbre de guidage fixé sur le bras de suspension, lequel arbre de guidage s'étend dans la rainure de manière que, en position de travail, la première partie de ladite rainure puisse se déplacer sur ledit arbre de guidage pour autoriser le pivotement du mécanisme de coupe autour de l'axe longitudinal de la deuxième articulation.

Le dispositif de verrouillage est également doté d'un moyen d'actionnement lié d'une part à la plaque pivotante et d'autre part à la structure d'attelage de manière que, lorsque le bras de suspension et le mécanisme de coupe sont pivotés dans la position de transport autour de l'axe longitudinal de la première articulation, ledit moyen d'actionnement agit sur la plaque pivotante pour la faire pivoter autour de l'axe longitudinal de l'articulation supplémentaire. A cet effet, la deuxième partie de la rainure vient se loger sur l'arbre de guidage permettant de fixer le mécanisme de coupe au bras de suspension.

Lorsque le bras de suspension et le mécanisme de coupe sont pivotés dans la position de travail, le moyen d'actionnement cesse d'agir sur la plaque pivotante, laquelle est rappelée dans sa position de travail où la première partie de la rainure peut se déplacer sur l'arbre de guidage, au moyen d'un élément élastique.

Une grande partie du dispositif de verrouillage, notamment la plaque pivotante et l'arbre de guidage, est implantée juste au-dessus du mécanisme de coupe, entre ce dernier et le bras de suspension.

Il est bien connu par l'homme du métier que la partie supérieure du mécanisme de coupe est particulièrement exposée aux végétaux ce qui risque de compromettre le bon fonctionnement du dispositif de verrouillage.

En outre, le moyen d'actionnement du dispositif de verrouillage de cette machine de coupe connue est constitué d'une ficelle, laquelle est détendue lorsqu'elle cesse d'agir sur la plaque pivotante en position de travail. Lorsque la ficelle est détendue, elle pendille le long du bras de suspension en direction du sol, ce qui risque de gêner le bon déroulement des opérations. En effet, cette ficelle risque de se prendre dans le fourrage ou dans un élément animé comme par exemple la roue du véhicule moteur auquel la machine de coupe est attelée. En sus, lorsque la machine de coupe est transportée, la ficelle est soumise à des contraintes assez importantes, notamment lorsque le véhicule moteur auquel est attelée la machine de coupe passe dans des ornières, ce qui risque de rompre ladite ficelle.

La conception de ce dispositif de verrouillage connu est relativement fragile ce qui risque d'entraîner des coûts assez conséquents.

Le but de la présente invention est de remédier aux inconvénients de la machine de coupe connue tout en veillant à réaliser une machine de coupe simple et fiable.

A cet effet, la machine de coupe de végétaux est caractérisée en ce que l'organe de liaison est lié au mécanisme de coupe au moyen d'une troisième articulation présentant un axe géométrique au moins sensiblement parallèle à l'axe longitudinal de la deuxième articulation et, qu'il est prévu un moyen de liaison solidaire de la structure d'attelage :
- permettant, en position de travail, un déplacement de l'organe de liaison par rapport à la structure d'attelage, et
- interdisant, en position de transport, un déplacement de l'organe de liaison par rapport à la structure d'attelage.

Une telle machine de coupe de végétaux est simple et fiable et ne présente pas d'éléments qui risquent de gêner le bon déroulement des opérations.

L'invention concerne également les caractéristiques suivantes considérées isolément ou dans toutes leurs combinaisons techniquement possibles :
- l'organe de liaison est lié à la structure d'attelage à l'aide du moyen de liaison lequel:
   - permet, en position de travail un déplacement de l'organe de liaison par rapport à la structure d'attelage transversalement à la direction d'avance au travail ; et
   - interdit, en position de transport, un déplacement de l'organe de liaison par rapport à la structure d'attelage suivant la direction d'avance au travail.
- le moyen de liaison liant l'organe de liaison à la structure d'attelage comporte une quatrième articulation présentant un axe géométrique dirigé vers le haut ;
- en position normale de travail (mécanisme de coupe s'étendant horizontalement), l'axe géométrique de la quatrième articulation est au moins sensiblement confondu avec l'axe longitudinal de la première articulation ; un tel agencement permet de pivoter le mécanisme de coupe et le bras de suspension de la position de travail dans la position de transport ou inversement, autour de l'axe longitudinal de la première articulation sans varier la position relative de l'organe de liaison par rapport au bras de suspension et également sans varier la position relative du mécanisme de coupe par rapport audit bras de suspension ; un tel agencement permet notamment de conserver une position sensiblement horizontale du mécanisme de coupe dans la position de transport ce qui présente l'avantage, lors du transport de la machine de coupe, de conserver sensiblement la même garde au sol dans la position andain (mécanisme de coupe s'étendant transversalement à la direction d'avance au travail et au-dessus du sol);
- le moyen de liaison liant l'organe de liaison à la structure d'attelage comporte un tourillon lié à l'organe de liaison et s'étendant au travers d'un dispositif de guidage lié à la structure d'attelage ;
- le dispositif de guidage comporte une rainure s'étendant transversalement à la direction d'avance au travail ;
- la rainure est au moins sensiblement rectiligne ;
- l'axe longitudinal de la rainure s'étend au moins sensiblement orthogonalement à la direction d'avance au travail et au moins sensiblement horizontalement ; un tel positionnement de la rainure permet, en position de travail, à l'organe de liaison de se déplacer transversalement à la direction d'avance au travail et interdit, en position de transport, audit organe de liaison un déplacement représentatif ;
- l'axe longitudinal de la rainure coupe l'axe longitudinal de la première articulation ;
- l'axe longitudinal de la rainure coupe au moins sensiblement orthogonalement l'axe longitudinal de la première articulation ;
- le pivotement du mécanisme de coupe autour de l'axe longitudinal de la deuxième articulation est limité dans chaque sens par une butée ;
- les butées sont implantées dans le voisinage du moyen de liaison liant l'organe de liaison à la structure d'attelage ;
- les butées sont formées par les deux extrémités de la rainure ;
- il est prévu un mécanisme à levier implanté entre le mécanisme de coupe et le bras de suspension, l'organe de liaison étant lié audit mécanisme à levier ;
- le mécanisme à levier comporte un levier pivotant à deux branches :
   - qui est lié, dans sa partie médiane au bras de suspension au moyen d'une cinquième articulation d'axe longitudinal au moins sensiblement parallèle à l'axe longitudinal de la deuxième articulation ;
   - dont la première branche est liée à l'organe de liaison au moyen de la troisième articulation ; et
   - dont la deuxième branche est liée au mécanisme de coupe ; un tel agencement permet de transformer le pivotement du mécanisme de coupe autour de l'axe longitudinal de la deuxième articulation en un mouvement sensiblement rectiligne de l'organe de liaison ;
- le mécanisme à levier comporte en sus une bielle implantée entre le levier pivotant et le mécanisme de coupe, ladite bielle étant liée d'une part au levier pivotant au moyen d'une sixième articulation et d'autre part au mécanisme de coupe au moyen d'une septième articulation, les axes longitudinaux desdites sixième et septième articulations étant au moins sensiblement parallèles à l'axe longitudinal de la deuxième articulation ;
- la septième articulation est une articulation élastique ;
- la machine de coupe de végétaux comporte un dispositif stabilisateur destiné à rappeler le mécanisme de coupe dans une position prédéterminée lorsque ledit mécanisme de coupe se trouve en position de travail ; un tel dispositif stabilisateur permet en sus, lors des manoeuvres en bout de parcelle, lorsque le mécanisme de coupe est suspendu transversalement à la direction d'avance au travail au-dessus du sol au moyen du bras de suspension, de maintenir ledit mécanisme de coupe dans la position prédéterminée ;
- la position prédéterminée est la position normale de travail, c'est-à-dire celle où le mécanisme de coupe s'étend au moins sensiblement horizontalement ;
- le dispositif stabilisateur comporte deux éléments élastiques agissant dans des sens contraires;
- chaque élément élastique est implanté entre l'organe de liaison et le bras de suspension ;
- l'intensité de l'action fournie par le dispositif stabilisateur est réglable ;
- l'organe de liaison s'étend au-dessus du bras de suspension ; une telle position dudit organe de liaison permet avantageusement de le mettre à l'abri des végétaux pour ne pas compromettre le bon fonctionnement du dispositif de verrouillage ;
- l'organe de liaison est constitué d'une tringle s'étendant au moins sensiblement parallèlement au bras de suspension.

D'autres objets et caractéristiques de l'invention ressortiront de la description ci-après, avec référence aux dessins annexés qui représentent, à titre d'exemple non limitatif, une forme de réalisation de la machine de coupe selon l'invention.

Sur ces dessins:
- la figure 1 représente, en position de travail, une machine de coupe selon l'invention vue de l'arrière et liée à un véhicule moteur ;
- la figure 2 représente la machine de coupe de la figure 1, vue de dessus ;
- la figure 3 représente la machine de coupe de la figure 1, en position de transport selon une vue de dessus ;
- la figure 4 représente un agrandissement partiel de la figure 1 ;
- la figure 5 représente un agrandissement partiel de la figure 3.

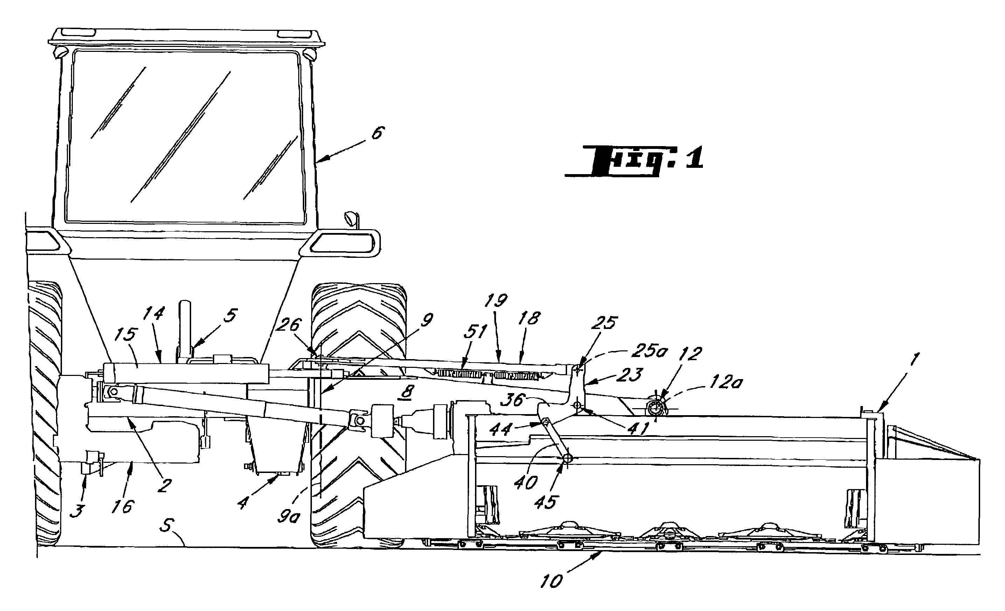

La machine de coupe (1) telle que représentée sur les figures 1 à 5 est semblable à la machine de coupe décrite par le document FR 96 03122. Pour de plus amples détails, on se reportera, en cas de besoin, au texte dudit document.

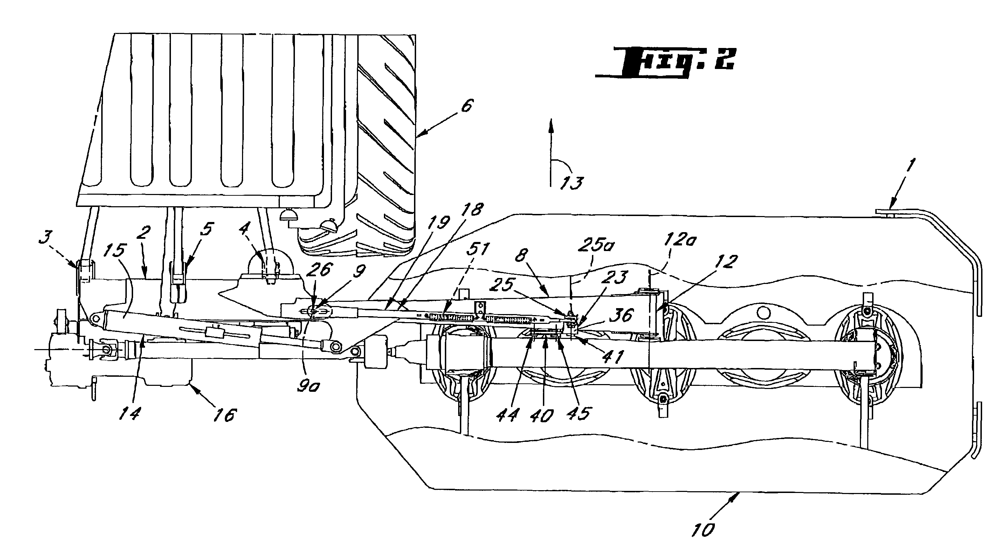

La machine de coupe (1), telle que représentée sur les figures 1 à 3, est destinée à couper et/ou broyer des végétaux. Elle comporte une structure d'attelage (2) munie de deux points d'attelage inférieurs (3, 4) et d'un point d'attelage supérieur (5) au moyen desquels ladite machine de coupe (1) est liée à un véhicule moteur (6). A la structure d'attelage (2) est lié un bras de suspension (8) au moyen d'une première articulation (9) d'axe longitudinal (9a) au moins sensiblement vertical. A l'extrémité du bras de suspension (8) est lié un mécanisme de coupe (10) au moyen d'une deuxième articulation (12) d'axe longitudinal (12a) au moins sensiblement horizontal et au moins sensiblement parallèle à la direction d'avance au travail (13) lorsque ledit mécanisme de coupe (10) est dans la position de travail tel que représentée sur les figures 1 et 2.

En position de travail, le mécanisme de coupe (10) s'étend transversalement à la direction d'avance au travail (13) et repose sur le sol (S). En position de transport, le mécanisme de coupe (10) s'étend sensiblement suivant ladite direction d'avance au travail (13). A cet effet, il est prévu un moyen de manoeuvre (14) comportant un vérin hydraulique (15) destiné à pivoter le bras de suspension (8) et le mécanisme de coupe (10) de la position de travail dans la position de transport et inversement, autour de l'axe longitudinal (9a) de la première articulation (9).

La machine de coupe (1) est également dotée d'un dispositif de transmission (16) destiné à entraîner le mécanisme de coupe (10), ledit dispositif de transmission (16) étant lui-même entraîné par le véhicule moteur (6).

On remarquera en outre que la machine de coupe (1) comporte un dispositif de verrouillage (18). Ce dispositif de verrouillage (18) permet, en position de transport, de verrouiller le pivotement du mécanisme de coupe (10) autour de l'axe longitudinal (12a) de la deuxième articulation (12) et d'autoriser ledit pivotement en position de travail. A cet effet, le dispositif de verrouillage (18) comporte un organe de liaison (19) constitué, selon l'exemple représenté, d'une tringle (20) s'étendant sensiblement parallèlement au bras de suspension (8) et au-dessus de celui-ci. Selon l'exemple représenté, cette tringle (20) est rigide et, est liée à l'une (21) de ses extrémités (21, 22) à un mécanisme à levier (23) au moyen d'une troisième articulation (25) comportant un axe géométrique (25a) au moins sensiblement parallèle à l'axe longitudinal (12a) de la deuxième articulation (12). Selon l'exemple représenté, la troisième articulation (25) est une articulation sphérique permettant d'éviter un jeu excessif préjudiciable dans ladite articulation. On notera que le mécanisme à levier (23) est en sus lié au mécanisme de coupe (10). Ce mécanisme à levier (23) sera décrit plus en détail ultérieurement.

A l'autre extrémité (22), la tringle (20) est liée à la structure d'attelage (2) par un moyen de liaison (26) situé plus haut que la première articulation (9).

Le moyen de liaison (26) :
- permet, en position de travail, un déplacement de ladite tringle (20) par rapport à la structure d'attelage (2) transversalement à la direction d'avance au travail (13), et
- interdit, en position de transport, un déplacement de ladite tringle (20) par rapport à la structure d'attelage (2) suivant la direction d'avance au travail (13).

Le moyen de liaison (26) comporte une quatrième articulation (27) présentant un axe géométrique (27a) dirigé vers le haut. En position normale de travail (mécanisme de coupe (10) s'étendant transversalement à la direction d'avance au travail (13) et reposant horizontalement sur le sol (S)), l'axe géométrique (27a) de la quatrième articulation (27) est au moins sensiblement confondu avec l'axe longitudinal (9a) de la première articulation (9).

Le moyen de liaison (26) comporte également un tourillon (28) d'axe longitudinal (28a) confondu avec l'axe géométrique (27a) de la quatrième articulation (27). Ce tourillon (28) est lié à la tringle (20) et s'étend au travers d'un dispositif de guidage (29) lié à la structure d'attelage (2). Selon l'exemple représenté, ce dispositif de guidage (29) est formé par un support (30) fixé à la structure d'attelage (2), dans lequel est prévue une rainure (32). Cette rainure (32) s'étend transversalement à la direction d'avance au travail (13) et est au moins sensiblement rectiligne. Plus précisément, l'axe longitudinal (32a) de la rainure (32) s'étend au moins sensiblement orthogonalement à la direction d'avance au travail (13) et au moins sensiblement horizontalement au-dessus de la première articulation (9). On remarquera en outre que l'axe longitudinal (32a) de la rainure (32) coupe au moins sensiblement orthogonalement l'axe longitudinal (9a) de la première articulation (9).

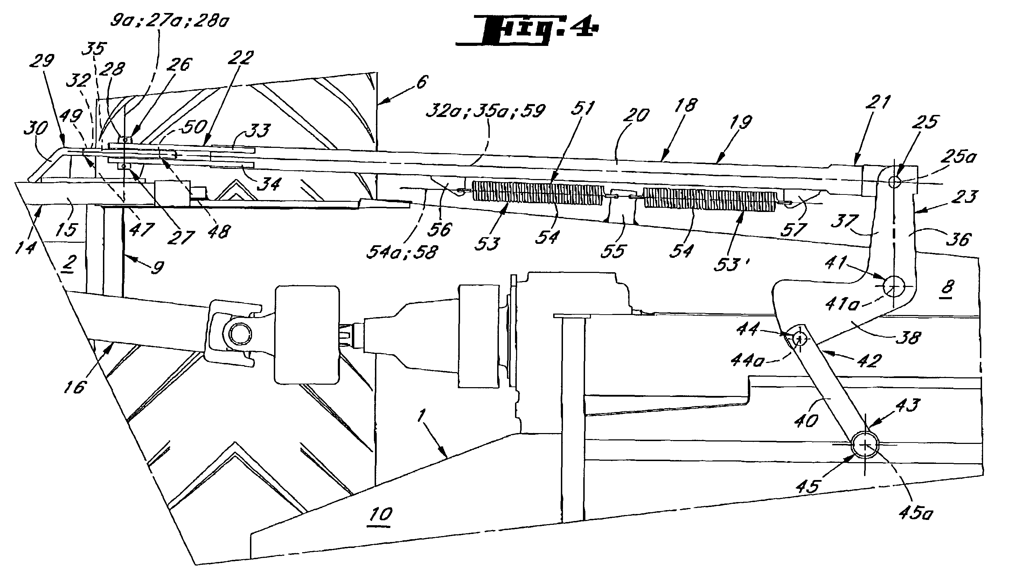

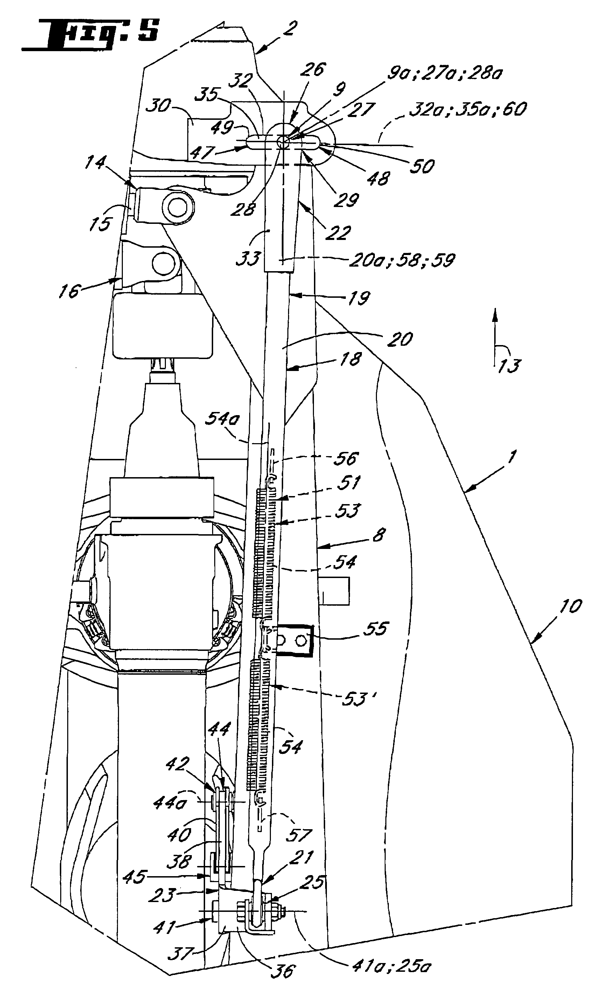

A la lumière des figures 4 et 5, on voit de manière plus précise que l'autre extrémité (22) de la tringle (20) comporte deux ailes (33, 34) entre lesquelles s'étend le support (30) du dispositif de guidage (29). Le tourillon (28) s'étend de part en part au travers des deux ailes (33, 34) et au travers de la rainure (32) prévue dans le support (30). A cet effet, selon l'exemple de réalisation représenté, le tourillon (28) est de forme cylindrique et la rainure (32) est un trou oblong (35) d'axe longitudinal (35a) confondu avec l'axe longitudinal (32a) de la rainure (32). Le tourillon (28) et le trou oblong (35) sont agencés de manière que, en position de travail, ledit tourillon (28) peut se déplacer dans le trou oblong (35) suivant l'axe longitudinal (35a) et, lors de la mise en position de transport, ledit tourillon (28) peut pivoter autour de son axe longitudinal (28a).

Le mécanisme à levier (23), auquel est liée l'extrémité (21) de la tringle (20) au moyen de la troisième articulation (25), est implanté entre le mécanisme de coupe (10) et le bras de suspension (8). Ce mécanisme à levier (23) transforme le pivotement du mécanisme de coupe (10) autour de l'axe longitudinal (12a) de la deuxième articulation (12), en un déplacement sensiblement rectiligne, horizontal et transversal à la direction d'avance au travail (13) de la tringle (20). A cet effet, le mécanisme à levier (23) comporte un levier pivotant (36) à deux branches (37, 38) et une bielle (40).

Le levier pivotant (36) est lié, dans sa partie médiane, au bras de suspension (8) au moyen d'une cinquième articulation (41) d'axe longitudinal (4 la) au moins sensiblement parallèle à l'axe longitudinal (12a) de la deuxième articulation (12). La première branche (37) du levier pivotant (36) est liée à l'extrémité (21) de la tringle (20) au moyen de la troisième articulation (25) décrite précédemment, alors que la deuxième branche (38) du levier pivotant (36) est liée à l'une (42) des extrémités (42, 43) de la bielle (40) au moyen d'une sixième articulation (44) d'axe longitudinal (44a) au moins sensiblement parallèle à l'axe longitudinal (12a) de la deuxième articulation (12). A la lumière de la figure 4, on voit que, en position normale de travail, la troisième articulation (25) est située dans un même plan vertical dirigé suivant la direction d'avance au travail (13) que la cinquième articulation (41). Ladite troisième articulation (25) est située au-dessus de la cinquième articulation (41), alors que la sixième articulation (44) est située quelque peu en dessous de ladite cinquième articulation (41). Ladite sixième articulation (44) est également située dans un plan vertical dirigé d'une part suivant la direction d'avance au travail (13) et implanté d'autre part entre la cinquième articulation (41) et la première articulation (9).

La bielle (40) est implantée entre le levier pivotant (36) et le mécanisme de coupe (10). A cet effet, la bielle (40) est liée à l'autre (43) de ses extrémités (42, 43) au mécanisme de coupe (10) au moyen d'une septième articulation (45) d'axe longitudinal (45a) au moins sensiblement parallèle à l'axe longitudinal (12a) de la deuxième articulation (12). Cette septième articulation (45) est située, tel que visible sur la figure 4, en position normale de travail, d'une part dans un plan horizontal implanté en dessous de la sixième articulation (44) et d'autre part dans un plan vertical implanté entre ladite sixième articulation (44) et la cinquième articulation (41).

Selon l'exemple représenté, la septième articulation (45) est une articulation élastique qui amortie, en position de travail comme en position de transport, les différents chocs auxquels est soumis le dispositif de verrouillage (18).

Selon une vue de dessus de la machine de coupe (1), en position normale de travail telle que représentée sur la figure 2, on voit que la cinquième articulation (41) et la sixième articulation (44) sont sensiblement situées dans un même plan vertical transversal, de préférence sensiblement orthogonal à la direction d'avance au travail (13), alors que la troisième articulation (25) est située devant ledit plan et la septième articulation (45) est située derrière ledit plan.

On notera en outre que, en position de travail, le pivotement du mécanisme de coupe (10) autour de l'axe longitudinal (12a) de la deuxième articulation (12) est limité dans chaque sens par une butée (47, 48). Chaque butée (47, 48) est implantée dans le voisinage du moyen de liaison (26). Plus précisément, chaque butée (47, 48) est formée par une extrémité (49, 50) du trou oblong (35).

Lorsque le mécanisme de coupe (10) pivote autour de l'axe longitudinal (12a) dans une des positions extrêmes (mécanisme de coupe (10) incliné au maximum par rapport au bras de suspension (8)), le tourillon (28) du moyen de liaison (26) est en appui sur l'extrémité (49, 50) correspondante du trou oblong (35).

A la lumière des différentes figures, on voit encore que la machine de coupe (1) comporte un dispositif stabilisateur (51) destiné à rappeler le mécanisme de coupe (10) dans une position prédéterminée lorsque ledit mécanisme de coupe (10) se trouve en position de travail. Selon l'exemple représenté, le dispositif stabilisateur (51) est agencé au dispositif de verrouillage (18) et la position prédéterminée est la position normale de travail, c'est-à-dire celle où le mécanisme de coupe (10) s'étend au moins sensiblement horizontalement.

Le dispositif stabilisateur (51) comporte deux éléments élastiques (53, 53') implantés chacun entre la tringle (20) et le bras de suspension (8). Selon l'exemple de réalisation représenté, chaque élément élastique (53, 53') est composé par un ressort de traction (54) d'axe longitudinal (54a) agissant dans des sens contraires. A cet effet, chaque ressort de traction (54) est lié à l'une des ses extrémités à une patte commune (55) fixée sur le bras de suspension (8) et, à l'autre extrémité à une attache (56, 57) respective fixée sur la tringle (20).

L'une (56) des attaches (56, 57) est située entre la patte commune (55) et l'autre extrémité (22) de la tringle (20) liée à la structure d'attelage (2) par le moyen de liaison (26). L'autre attache (57) est située entre la patte commune (55) et l'extrémité (21) de la tringle (20) liée au mécanisme à levier (23). On notera en sus que, en position normale de travail, chaque ressort de traction (54) est tendu de manière à procurer une certaine stabilité initiale au mécanisme de coupe (10) notamment en position andain (mécanisme de coupe (10) s'étendant au-dessus des végétaux coupés ou à couper pour les manoeuvres en bout de champs). On remarquera que les axes longitudinaux (54a) des ressorts de traction (54) sont confondus et que la droite d'action (58) desdits ressorts de traction (54) est, selon une vue de l'arrière, en position de travail, au moins sensiblement parallèle à une droite (59) passant par la troisième et la quatrième articulation (25, 27) et, selon une vue de dessus, au moins sensiblement confondu avec ladite droite (59).

Un tel agencement des ressorts de traction (54) permet, en position de transport, de ramener le tourillon (28) au moins sensiblement au milieu du trou oblong (35) pour assurer une parfaite stabilité du mécanisme de coupe (10).

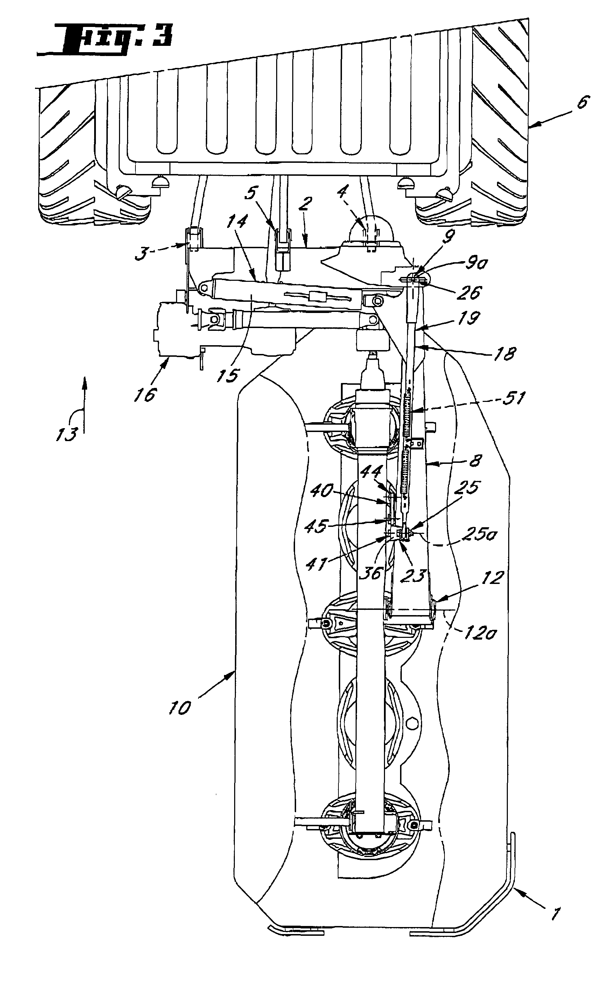

La machine de coupe (1) selon la présente invention fonctionne de la manière suivante : lorsque la machine de coupe (1) est dans la position de transport, telle que représentée sur les figures 3 et 5, le mécanisme de coupe (10) s'étend au-dessus du sol (S) et avec le bras de suspension (8), au moins sensiblement parallèlement à la direction d'avance au travail (13), derrière la structure d'attelage (2).

Dans cette position de transport, l'axe longitudinal (20a) de la tringle (20) s'étend, selon une vue de dessus, sensiblement orthogonalement à l'axe longitudinal (35a) du trou oblong (35), ce qui ne permet aucun déplacement de ladite tringle (20) par rapport à la structure d'attelage (2) et qui a pour effet de condamner la deuxième articulation (12) et de fixer le mécanisme de coupe (10) au bras de suspension (8).

Lorsque l'opérateur souhaite amener la machine de coupe (1) de la position de transport dans la position de travail, il actionne le moyen de manoeuvre (14), ce qui a pour effet de faire pivoter le mécanisme de coupe (10) et le bras de suspension (8) autour de l'axe longitudinal (9a) de la première articulation (9) dans la position de travail dans laquelle, ils s'étendent sensiblement orthogonalement à la direction d'avance au travail (13). Lors de ce pivotement la tringle (20) pivote autour de l'axe géométrique (27a) de la quatrième articulation (27) jusqu'à ce qu'elle s'étende sensiblement orthogonalement à la direction d'avance au travail (13). Dans cette position, l'axe longitudinal (20a) de la tringle (20) est sensiblement confondu avec l'axe longitudinal (35a) du trou oblong (35), ce qui permet au tourillon (28) de se déplacer dans ledit trou oblong (35). Ensuite, l'opérateur abaisse la machine de coupe (1), de manière à faire reposer le mécanisme de coupe (10) sur le sol (S). La machine de coupe (1) est en position de travail. Puis, l'opérateur actionne le dispositif de transmission (16) à partir du véhicule moteur (6) afin d'entraîner ledit mécanisme de coupe (10).

Lors du travail, la machine de coupe (1) est mue dans un champ couvert de végétaux à couper au moyen du véhicule moteur (6). Le mécanisme de coupe (10) peut aisément s'adapter au relief du sol (S) en pivotant notamment autour de l'axe longitudinal (12a) de la deuxième articulation (12). A cet effet, la bielle (40) liée au mécanisme de coupe (10) agit sur le levier pivotant (36), lequel pivote autour de l'axe longitudinal (41a) de la cinquième articulation (41) ce qui a pour effet de déplacer la tringle (20) dans un plan vertical contenant l'axe longitudinal (35a) du trou oblong (35). Lors du déplacement de la tringle (20), le tourillon (28) se déplace longitudinalement dans le trou oblong (35) dans les limites autorisées par ces extrémités (49, 50). Lorsque la tringle (20) se déplace, un des ressorts de traction (54) à tendance à se détendre alors que l'autre ressort de traction se tend davantage ce qui a pour effet de toujours vouloir rappeler le mécanisme de coupe (10) dans la position de travail prédéterminée. Un tel agencement permet avantageusement de rigidifier le pivotement du mécanisme de coupe (10) autour de l'axe longitudinal (12a) de la deuxième articulation (12) notamment en position andain lorsque ledit mécanisme de coupe (10) s'étend au-dessus des végétaux coupés ou à couper lors des manoeuvres en bout de champs.

Lorsque l'opérateur souhaite amener la machine de coupe (1) de la position de travail dans la position de transport, il coupe l'entraînement du mécanisme de coupe (10), soulève ce dernier au-dessus du sol (S) et actionne le moyen de manoeuvre (14) pour pivoter ledit mécanisme de coupe (10) et le bras de suspension (8) autour de l'axe longitudinal (9a) de la première articulation (9) jusque dans la position de transport.

Finalement, différentes modifications restent possibles, notamment en ce qui concerne la constitution des divers éléments ou par substitution d'équivalents techniques, sans pour autant sortir du domaine de protection défini par les revendications.

Ainsi, il est parfaitement possible de prévoir que l'intensité de l'action fournie par le dispositif stabilisateur (51) soit réglable de manière à pouvoir adapter la position prédéterminée du mécanisme de coupe en fonction de la répartition des masses de celui-ci. A cet effet, il peut par exemple être prévu de déplacer les attaches (56, 57) le long de la tringle (20).

Il est également possible de réaliser un dispositif stabilisateur équipé de ressorts de compression. Ainsi, il est envisageable de disposer deux ressorts de compression l'un en face de l'autre, venant chacun d'une part en appui sur un support commun fixé sur le bras de suspension (8) et d'autre part sur un appui respectif solidaire de la tringle (20). Il peut également être prévu que l'axe longitudinal d'un ressort de compression soit confondu avec l'axe longitudinal de l'autre ressort de compression et que les axes longitudinaux desdits ressorts soient confondus avec l'axe longitudinal (20a) de la tringle (20).

Il est encore possible de prévoir un réglage de l'angle de pivotement du mécanisme de coupe (10) autour de l'axe longitudinal (12a) de la deuxième articulation (12). A cet effet, il est parfaitement envisageable de concevoir un dispositif de guidage muni d'une rainure de longueur variable.

Pour des raisons d'encombrement ou autre, il est encore concevable de situer la rainure (32) du dispositif de guidage (29) à un endroit autre que au-dessus de la première articulation (9).

Ainsi, selon une vue de dessus, en plaçant la rainure (32) orthogonalement à la direction d'avance au travail (13) sur une droite orientée à 45° par rapport à ladite direction d'avance au travail (13), le mécanisme de coupe (10) conservera la position prédéterminée de travail en position de transport. En plaçant la rainure (32) orthogonalement à la direction d'avance au travail (13) à un endroit autre que ceux décrits précédemment, le mécanisme de coupe (10) pivotera autour de l'axe longitudinal (12a) de la deuxième articulation (12) lors de la mise en position de travail ou de transport de la machine de coupe (1), c'est-à-dire que ledit mécanisme de coupe (10) occupera en position de transport, une position relative par rapport au bras de suspension (8) différente de celle de la position de travail.

## Revendications

1. Machine de coupe de végétaux comportant:
- une structure d'attelage (2) destinée à être liée à un véhicule moteur (6);
- un mécanisme de coupe (10) s'étendant, lors du travail, transversalement à la direction d'avance au travail (13) (position de travail) et, lors du transport, au moins sensiblement suivant la direction d'avance au travail (13) (position de transport) ;
- un bras de suspension (8) lié d'une part à la structure d'attelage (2) au moyen d'une première articulation (9) d'axe longitudinal (9a) dirigé vers le haut et d'autre part au mécanisme de coupe (10) au moyen d'une deuxième articulation (12) d'axe longitudinal (12a) dirigé au moins sensiblement suivant la direction d'avance au travail (13) lorsque ledit mécanisme de coupe (10) est dans la position de travail ;
- un dispositif de verrouillage (18) permettant, en position de transport, de verrouiller le pivotement du mécanisme de coupe (10) autour de l'axe longitudinal (12a) de la deuxième articulation (12), et comportant un organe de liaison (19) lié d'une part au mécanisme de coupe (10) et d'autre part à la structure d'attelage (2),
***caractérisée en ce* que** l'organe de liaison (19) est lié au mécanisme de coupe (10) au moyen d'une troisième articulation (25) présentant un axe géométrique (25a) au moins sensiblement parallèle à l'axe longitudinal (12a) de la deuxième articulation (12) et, qu'il est prévu un moyen de liaison (26) solidaire de la structure d'attelage (2):
- permettant, en position de travail, un déplacement de l'organe de liaison (19) par rapport à la structure d'attelage (2), et
- interdisant, en position de transport, un déplacement de l'organe de liaison (19) par rapport à la structure d'attelage (2).

2. Machine de coupe de végétaux selon la revendication 1, ***caractérisée en ce* que** l'organe de liaison (19) est lié à la structure d'attelage (2) à l'aide du moyen de liaison (26) lequel :
- permet, en position de travail, un déplacement de l'organe de liaison (19) par rapport à la structure d'attelage (2) transversalement à la direction d'avance au travail (13), et
- interdit, en position de transport, un déplacement de l'organe de liaison (19) par rapport à la structure d'attelage (2) suivant la direction d'avance au travail (13).

3. Machine de coupe de végétaux selon la revendication 1 ou 2, ***caractérisée en ce* que** le moyen de liaison (26) liant l'organe de liaison (19) à la structure d'attelage (2) comporte une quatrième articulation (27) présentant un axe géométrique (27a) dirigé vers le haut.

4. Machine de coupe de végétaux selon la revendication 3, ***caractérisée en ce* que**, en position normale de travail (mécanisme de coupe (10) s'étendant horizontalement), l'axe géométrique (27a) de la quatrième articulation (27) est au moins sensiblement confondu avec l'axe longitudinal (9a) de la première articulation (9).

5. Machine de coupe de végétaux selon la revendication 3 ou 4, ***caractérisée en ce* que** le moyen de liaison (26) liant l'organe de liaison (19) à la structure d'attelage (2) comporte un tourillon (28) lié à l'organe de liaison (19) et s'étendant au travers d'un dispositif de guidage (29) lié à la structure d'attelage (2).

6. Machine de coupe de végétaux selon la revendication 5, ***caractérisée en ce* que** le dispositif de guidage (29) comporte une rainure (32) s'étendant transversalement à la direction d'avance au travail (13).

7. Machine de coupe de végétaux selon la revendication 6, ***caractérisée en ce* que** la rainure (32) est au moins sensiblement rectiligne.

8. Machine de coupe de végétaux selon la revendication 7, ***caractérisée en ce* que** l'axe longitudinal (32a) de la rainure (32) s'étend au moins sensiblement orthogonalement à la direction d'avance au travail (13) et au moins sensiblement horizontalement.

9. Machine de coupe de végétaux selon la revendication 8, ***caractérisée en ce* que** l'axe longitudinal (32a) de la rainure (32) coupe l'axe longitudinal (9a) de la première articulation (9).

10. Machine de coupe de végétaux selon la revendication 9, ***caractérisée en ce* que** l'axe longitudinal (32a) de la rainure (32) coupe au moins sensiblement orthogonalement l'axe longitudinal (9a) de la première articulation (9).

11. Machine de coupe de végétaux selon l'une quelconque des revendications 1 à 10, ***caractérisée en ce* que** le pivotement du mécanisme de coupe (10) autour de l'axe longitudinal (12a) de la deuxième articulation (12) est limité dans chaque sens par une butée (47, 48).

12. Machine de coupe de végétaux selon la revendication 11, ***caractérisée en ce* que** les butées (47, 48) sont implantées dans le voisinage du moyen de liaison (26) liant l'organe de liaison (19) à la structure d'attelage (2).

13. Machine de coupe de végétaux selon la revendication 12 dans sa dépendance à la revendication 6, ***caractérisée en ce* que** les butées (47, 48) sont formées par les deux extrémités (49, 50) de la rainure (32).

14. Machine de coupe de végétaux selon l'une quelconque des revendications 1 à 13, ***caractérisée en ce* qu'**il est prévu un mécanisme à levier (23) implanté entre le mécanisme de coupe (10) et le bras de suspension (8), l'organe de liaison (19) étant lié audit mécanisme à levier (23).

15. Machine de coupe de végétaux selon la revendication 14, ***caractérisée en ce* que** le mécanisme à levier (23) comporte un levier pivotant (36) à deux branches (37, 38):
- qui est lié, dans sa partie médiane, au bras de suspension (8) au moyen d'une cinquième articulation (41) d'axe longitudinal (41a) au moins sensiblement parallèle à l'axe longitudinal (12a) de la deuxième articulation (12);
- dont la première branche (37) est liée à l'organe de liaison (19) au moyen de la troisième articulation (25); et
- dont la deuxième branche (38) est liée au mécanisme de coupe (10).

16. Machine de coupe de végétaux selon la revendication 15, ***caractérisée en ce* que** le mécanisme à levier (23) comporte en sus une bielle (40) implantée entre le levier pivotant (36) et le mécanisme de coupe (10), ladite bielle (40) étant liée d'une part au levier pivotant (36) au moyen d'une sixième articulation (44) d'axe longitudinal (44a) et d'autre part au mécanisme de coupe (10) au moyen d'une septième articulation (45) d'axe longitudinal (45a), lesdits axes longitudinaux (44a, 45a) étant au moins sensiblement parallèles à l'axe longitudinal (12a) de la deuxième articulation (12).

17. Machine de coupe de végétaux selon la revendication 16, ***caractérisée en ce* que** la septième articulation (45) est une articulation élastique.

18. Machine de coupe de végétaux selon l'une quelconque des revendications 1 à 17, ***caractérisée en ce* qu'**elle comporte un dispositif stabilisateur (51) destiné à rappeler le mécanisme de coupe (10) dans une position prédéterminée, lorsque ledit mécanisme de coupe (10) se trouve en position de travail.

19. Machine de coupe de végétaux selon la revendication 18, ***caractérisée en ce* que** ladite position prédéterminée est la position normale de travail, c'est-à-dire celle où le mécanisme de coupe (10) s'étend au moins sensiblement horizontalement.

20. Machine de coupe de végétaux selon la revendication 18 ou 19, ***caractérisée en ce* que** le dispositif stabilisateur (51) comporte deux éléments élastiques (53, 53') agissant dans des sens contraires.

21. Machine de coupe de végétaux selon la revendication 20, ***caractérisée en ce* que** chaque élément élastique (53, 53') est implanté entre l'organe de liaison (19) et le bras de suspension (8).

22. Machine de coupe de végétaux selon l'une quelconque des revendications 18 à 21, ***caractérisée en ce* que** l'intensité de l'action fournie par le dispositif stabilisateur (51) est réglable.

23. Machine de coupe de végétaux selon l'une quelconque des revendications 1 à 22, ***caractérisée en ce* que** l'organe de liaison (19) s'étend au-dessus du bras de suspension (8).

24. Machine de coupe de végétaux selon l'une quelconque des revendications 1 à 23, ***caractérisée en ce* que** l'organe de liaison (19) est constitué d'une tringle (20) s'étendant au moins sensiblement parallèlement au bras de suspension (8).

## Claims

1. Machine for cutting plant matter comprising:
- a hitching structure (2) intended to be connected to a motor vehicle (6);
- a cutting mechanism (10) extending, during work, transversely to the direction of forward travel during work (13) (work position) and, during transport, at least substantially in the direction of forward travel during work (13) (transport position);
- a suspension arm (8) connected, on the one hand, to the hitching structure (2) by means of a first articulation (9), the longitudinal axis (9a) of which is directed upwards and, on the other hand, to the cutting mechanism (10) by means of a second articulation (12), the longitudinal axis (12a) of which is directed at least substantially in the direction of forward travel during work (13) when the said cutting mechanism (10) is in the work position;
- a locking device (18) making it possible, in the transport position, to lock the pivoting of the cutting mechanism (10) about the longitudinal axis (12a) of the second articulation (12) and comprising a linking member (19) connected, on the one hand, to the cutting mechanism (10) and, on the other hand, to the hitching structure (2),
**characterized in that** the linking member (19) is connected to the cutting mechanism (10) by means of a third articulation (25) having a geometric axis (25a) at least substantially parallel to the longitudinal axis (12a) of the second articulation (12) and **in that** a linking means (26) secured to the hitching structure (2) is provided which:
- in the work position, allows the linking member (19) to move with respect to the hitching structure (2), and
- in the transport position, prevents the linking member (19) from moving with respect to the hitching structure (2).

2. Machine for cutting plant matter according to Claim 1, **characterized in that** the linking member (19) is connected to the hitching structure (2) with the aid of the linking means (26), which:
- in the work position, allows the linking member (19) to move with respect to the hitching structure (2) transversely to the direction of forward travel during work (13), and
- in the transport position, prevents the linking member (19) from moving with respect to the hitching structure (2) in the direction of forward travel during work (13).

3. Machine for cutting plant matter according to Claim 1 or 2, **characterized in that** the linking means (26) connecting the linking member (19) to the hitching structure (2) comprises a fourth articulation (27) having an upwardly-directed geometric axis (27a).

4. Machine for cutting plant matter according to Claim 3, **characterized in that**, in the normal work position (cutting mechanism (10) extending horizontally), the geometric axis (27a) of the fourth articulation (27) is at least substantially coincident with the longitudinal axis (9a) of the first articulation (9).

5. Machine for cutting plant matter according to Claim 3 or 4, **characterized in that** the linking means (26) connecting the linking member (19) to the hitching structure (2) comprises a journal (28) connected to the linking member (19) and extending through a guide device (29) connected to the hitching structure (2).

6. Machine for cutting plant matter according to Claim 5, **characterized in that** the guide device (29) comprises a slot (32) extending transversely to the direction of forward travel during work (13).

7. Machine for cutting plant matter according to Claim 6, **characterized in that** the slot (32) is at least substantially straight.

8. Machine for cutting plant matter according to Claim 7, **characterized in that** the longitudinal axis (32a) of the slot (32) extends at least substantially orthogonally to the direction of forward travel during work (13) and at least substantially horizontally.

9. Machine for cutting plant matter according to Claim 8, **characterized in that** the longitudinal axis (32a) of the slot (32) intersects the longitudinal axis (9a) of the first articulation (9).

10. Machine for cutting plant matter according to Claim 9, **characterized in that** the longitudinal axis (32a) of the slot (32) intersects the longitudinal axis (9a) of the first articulation (9) substantially orthogonally.

11. Machine for cutting plant matter according to any one of Claims 1 to 10, **characterized in that** the pivoting of the cutting mechanism (10) about the longitudinal axis (12a) of the second articulation (12) is limited in both directions by a stop (47,48).

12. Machine for cutting plant matter according to Claim 11, **characterized in that** the stops (47, 48) are installed near the linking means (26) connecting the linking member (19) to the hitching structure (2).

13. Machine for cutting plant matter according to Claim 12 in its dependence on Claim 6, **characterized in that** the stops (47, 48) are formed by the two ends (49, 50) of the slot (32).

14. Machine for cutting plant matter according to any one of claims 1 to 13, **characterized in that** a lever mechanism (23) is provided, installed between the cutting mechanism (10) and the suspension arm (8), the linking member (19) being connected to the said lever mechanism (23).

15. Machine for cutting plant matter according to Claim 14, **characterized in that** the lever mechanism (23) comprises a pivoting lever (36) with two branches (37, 38):
- which is connected, in its central part, to the suspension arm (8) by means of a fifth articulation (41), the longitudinal axis (41a) of which is at least substantially parallel to the longitudinal axis (12a) of the second articulation (12);
- the first branch (37) of which is connected to the linking member (19) by means of the third articulation (25); and
- the second branch (38) of which is connected to the cutting mechanism (10).

16. Machine for cutting plant matter according to Claim 15, **characterized in that** the lever mechanism (23) additionally comprises a connecting rod (40) installed between the pivoting lever (36) and the cutting mechanism (10), the said connecting rod (40) being connected, on the one hand, to the pivoting lever (36) by means of a sixth articulation (44) of longitudinal axis (44a) and, on the other hand, to the cutting mechanism (10) by means of a seventh articulation (45) of longitudinal axis (45a), the said longitudinal axes (44a, 45a) being at least substantially parallel to the longitudinal axis (12a) of the second articulation (12).

17. Machine for cutting plant matter according to Claim 16, **characterized in that** the seventh articulation (45) is an elastic articulation.

18. Machine for cutting plant matter according to any one of claims 1 to 17, **characterized in that** it comprises a stabilizer device (51) intended to return the cutting mechanism (10) to a predetermined position when the said cutting mechanism (10) is in the work position.

19. Machine for cutting plant matter according to Claim 18, **characterized in that** the said predetermined position is the normal work position, that is to say the one in which the cutting mechanism (10) extends at least substantially horizontally.

20. Machine for cutting plant matter according to Claim 18 or 19, **characterized in that** the stabilizer device (51) comprises two elastic elements (53, 53') acting in opposite directions.

21. Machine for cutting plant matter according to Claim 20, **characterized in that** each elastic element (53, 53') is installed between the linking member (19) and the suspension arm (8).

22. Machine for cutting plant matter according to any one of Claims 18 to 21, **characterized in that** the intensity of the action provided by the stabilizer device (51) is adjustable.

23. Machine for cutting plant matter according to any one of claims 1 to 22, **characterized in that** the linking member (19) extends above the suspension arm (8).

24. Machine for cutting plant matter according to any one of claims 1 to 23, **characterized in that** the linking member (19) consists of a rod (20) extending at least substantially parallel to the suspension arm (8).

## Patentansprüche

1. Maschine zum Schneiden von Pflanzengut, die
- eine Kupplungsvorrichtung (2) zur Verbindung mit einem Motorfahrzeug (6);
- einen Schneidmechanismus (10), der sich im Betrieb quer zur Arbeitsvorschubrichtung (13) (Arbeitsstellung) und beim Transport zumindest im wesentlichen in Arbeitsvorschubrichtung (13) (Transportstellung) erstreckt;
- einen Aufhängungsarm (8), der einerseits mittels eines ersten Gelenks (9) mit einer nach oben gerichteten Längsachse (9a) mit der Kupplungsvorrichtung (2) und andererseits mittels eines zweiten Gelenks (12) mit einer zumindest im wesentlichen entlang der Arbeitsvorschubrichtung (13) gerichteten Längsachse (12a) mit dem Schneidmechanismus (10) verbunden ist, wenn sich der Schneidmechanismus (10) in der Arbeitsstellung befindet;
- eine Verriegelungsvorrichtung (18), die in Transportstellung eine Verriegelung des Schwenkens des Schneidmechanismus (10) um die Längsachse (12a) des zweiten Gelenks (12) gestattet und ein Verbindungsglied (19) umfaßt, das einerseits mit dem Schneidmechanismus (10) und andererseits mit der Kupplungsvorrichtung (2) verbunden ist,
umfaßt,
***dadurch gekennzeichnet,* daß** das Verbindungsglied (19) mittels eines dritten Gelenks (25), das eine zumindest im wesentlichen parallel zur Längsachse (12) des zweiten Gelenks (12) verlaufende geometrische Achse (25a) aufweist, mit dem Schneidmechanismus (10) verbunden ist und daß ein fest mit der Kupplungsvorrichtung (2) verbundenes Verbindungsmittel (26) vorgesehen ist, das:
- in Arbeitsstellung eine Verschiebung des Verbindungsglieds (19) bezüglich der Kupplungsvorrichtung (2) gestattet und
- in Transportstellung eine Verschiebung des Verbindungsglieds (19) bezüglich der Kupplungsvorrichtung (2) verhindert.

2. Maschine zum Schneiden von Pflanzengut nach Anspruch 1, ***dadurch gekennzeichnet,* daß** das Verbindungsglied (19) mittels des Verbindungsmittels (26) mit der Kupplungsvorrichtung (2) verbunden ist, wobei das Verbindungsmittel:
- in Arbeitsstellung eine Verschiebung des Verbindungsglieds (19) bezüglich der Kupplungsvorrichtung (2) quer zur Arbeitsvorschubrichtung (13) gestattet und
- in Transportstellung eine Verschiebung des Verbindungsglieds (19) bezüglich der Kupplungsvorrichtung (2) entlang der Arbeitsvorschubrichtung (13) verhindert.

3. Maschine zum Schneiden von Pflanzengut nach Anspruch 1 oder 2, ***dadurch gekennzeichnet,* daß** das das Verbindungsglied (19) mit der Kupplungsvorrichtung (2) verbindende Verbindungsmittel (26) ein viertes Gelenk (27) aufweist, das eine nach oben gerichtete geometrische Achse (27a) aufweist.

4. Maschine zum Schneiden von Pflanzengut nach Anspruch 3, ***dadurch gekennzeichnet,* daß** die geometrische Achse (27a) des vierten Gelenks (27) in normaler Arbeitsstellung (in der sich der Schneidmechanismus (10) horizontal erstreckt) zumindest im wesentlichen mit der Längsachse (9a) des ersten Gelenks (9) zusammenfällt.

5. Maschine zum Schneiden von Pflanzengut nach Anspruch 3 oder 4, ***dadurch gekennzeichnet,* daß** das das Verbindungsglied (19) mit der Kupplungsvorrichtung (2) verbindende Verbindungsmittel (26) einen Zapfen (28) umfaßt, der mit dem Verbindungsglied (19) verbunden ist und sich durch eine mit der Kupplungsvorrichtung (2) verbundene Führungsvorrichtung (29) erstreckt.

6. Maschine zum Schneiden von Pflanzengut nach Anspruch 5, ***dadurch gekennzeichnet,* daß** die Führungsvorrichtung (29) eine quer zur Arbeitsvorschubrichtung (13) verlaufende Nut (32) enthält.

7. Maschine zum Schneiden von Pflanzengut nach Anspruch 6, ***dadurch gekennzeichnet,* daß** die Nut (32) zumindest im wesentlichen geradlinig ist.

8. Maschine zum Schneiden von Pflanzengut nach Anspruch 7, ***dadurch gekennzeichnet,* daß** die Längsachse (32a) der Nut (32) zumindest im wesentlichen orthogonal zur Arbeitsvorschubrichtung (13) und zumindest im wesentlichen horizontal verläuft.

9. Maschine zum Schneiden von Pflanzengut nach Anspruch 8, ***dadurch gekennzeichnet,* daß** die Längsachse (32a) der Nut (32) die Längsachse (9a) des ersten Gelenks (9) schneidet.

10. Maschine zum Schneiden von Pflanzengut nach Anspruch 9, ***dadurch gekennzeichnet,* daß** die Längsachse (32a) der Nut (32) die Längsachse (9a) des ersten Gelenks (9) zumindest im wesentlichen orthogonal schneidet.

11. Maschine zum Schneiden von Pflanzengut nach irgend einem der Ansprüche 1 bis 10, ***dadurch gekennzeichnet,* daß** das Schwenken des Schneidmechanismus (10) um die Längsachse (12a) des zweiten Gelenks (12) in jeder Richtung durch einen Anschlag (47, 48) begrenzt wird.

12. Maschine zum Schneiden von Pflanzengut nach Anspruch 11, ***dadurch gekennzeichnet,* daß** die Anschläge (47, 48) in der Nähe des das Verbindungsglied (19) mit der Kupplungsvorrichtung (2) verbindenden Verbindungsmittels (26) angebracht sind.

13. Maschine zum Schneiden von Pflanzengut nach Anspruch 12, insofern von Anspruch 6 abhängig, ***dadurch gekennzeichnet,* daß** die Anschläge (47, 48) durch die zwei Enden (49, 50) der Nut (32) gebildet werden.

14. Maschine zum Schneiden von Pflanzengut nach irgend einem der Ansprüche 1 bis 13, ***dadurch gekennzeichnet,* daß** ein zwischen dem Schneidmechanismus (10) und dem Aufhängungsarm (8) angebrachter Hebelmechanismus (23) vorgesehen ist, wobei das Verbindungsglied (19) mit dem Hebelmechanismus (23) verbunden ist.

15. Maschine zum Schneiden von Pflanzengut nach Anspruch *14,* ***dadurch gekennzeichnet,* daß** der Hebelmechanismus (23) einen Schwenkhebel (36) mit zwei Armen (37, 38) aufweist,
- der in seinem mittleren Teil mittels eines fünften Gelenks (41) mit einer zumindest im wesentlichen parallel zur Längsachse (12a) des zweiten Gelenks (12) verlaufenden Längsachse (41a) mit dem Aufhängungsarm (8) verbunden ist;
- dessen erster Arm (37) mittels des dritten Gelenks (25) mit dem Verbindungsglied (19) verbunden ist und
- dessen zweiter Arm (38) mit dem Schneidmechanismus (10) verbunden ist.

16. Maschine zum Schneiden von Pflanzengut nach Anspruch 15, ***dadurch gekennzeichnet,* daß** der Hebelmechanismus (23) des weiteren ein zwischen dem Schwenkhebel (36) und dem Schneidmechanismus (10) angebrachtes Zwischenglied (40) aufweist, welches einerseits mittels eines sechsten Gelenks (44) mit einer Längsachse (44a) mit dem Schwenkhebel (36) und andererseits mittels eines siebten Gelenks (45) mit einer Längsachse (45a) mit dem Schneidmechanismus (10) verbunden ist, wobei die Längsachsen (44a, 45a) zumindest im wesentlichen parallel zur Längsachse (12a) des zweiten Gelenks (12) verlaufen.

17. Maschine zum Schneiden von Pflanzengut nach Anspruch 16, ***dadurch gekennzeichnet,* daß** das siebte Gelenk (45) ein elastisches Gelenk ist.

18. Maschine zum Schneiden von Pflanzengut nach irgend einem der Ansprüche 1 bis 17, ***dadurch gekennzeichnet,* daß** sie eine Stabilisiervorrichtung (51) aufweist, die zum Zurückholen des Schneidmechanismus (10) in eine vorbestimmte Stellung, wenn sich der Schneidmechanismus (10) in Arbeitsstellung befindet, bestimmt ist.

19. Maschine zum Schneiden von Pflanzengut nach Anspruch 18, ***dadurch gekennzeichnet,* daß** die vorbestimmte Stellung die normale Arbeitsstellung ist, das heißt die, in der sich der Schneidmechanismus (10) zumindest im wesentlichen horizontal erstreckt.

20. Maschine zum Schneiden von Pflanzengut nach Anspruch 18 oder 19, ***dadurch gekennzeichnet,* daß** die Stabilisiervorrichtung (51) zwei in entgegengesetzten Richtungen wirkende elastische Elemente (53, 53') aufweist.

21. Maschine zum Schneiden von Pflanzengut nach Anspruch 20, ***dadurch gekennzeichnet,* daß** jedes elastische Element (53, 53') zwischen dem Verbindungsglied (19) und dem Aufhängungsarm (8) angebracht ist.

22. Maschine zum Schneiden von Pflanzengut nach irgend einem der Ansprüche 18 bis 21, ***dadurch gekennzeichnet,* daß** die Stärke der durch die Stabilisiervorrichtung (51) gelieferten Wirkung einstellbar ist.

23. Maschine zum Schneiden von Pflanzengut nach irgend einem der Ansprüche 1 bis 22, ***dadurch gekennzeichnet,* daß** sich das Verbindungsglied (19) über dem Aufhängungsarm (8) erstreckt.

24. Maschine zum Schneiden von Pflanzengut nach irgend einem der Ansprüche 1 bis 23, ***dadurch gekennzeichnet,* daß** das Verbindungsglied (19) aus einer sich zumindest im wesentlichen parallel zum Aufhängungsarm (8) erstreckenden Stange (20) besteht.
